(19) **Europäisches Patentamt**

**European Patent Office**

**Office européen des brevets**

(11)  **EP 0 853 106 B1**

(12)  **EUROPEAN PATENT SPECIFICATION**

(45) Date of publication and mention
of the grant of the patent:
**21.11.2001   Bulletin 2001/47**

(51) Int Cl.[7]: **C09D 11/00**
// B41J2/01

(21) Application number: **97310494.6**

(22) Date of filing: **23.12.1997**

(54) **Pigment based ink jet recording fluid**

Pigmenthaltige Tintenstrahl-Aufzeichnungsflüssigkeit

Liquide pour enregistrement par jet d'encre contenant un pigment

(84) Designated Contracting States:
**DE FR GB**

(30) Priority:  **10.01.1997  US 781650**

(43) Date of publication of application:
**15.07.1998   Bulletin 1998/29**

(73) Proprietor: **Scitex Digital Printing, Inc.**
**Dayton, Ohio 45420-4099 (US)**

(72) Inventors:
• **Thakkar, Sharad R.**
**Beavercreek, Ohio 45434 (US)**

• **Chen, Jing-Den**
**Dayton, Ohio 45458 (US)**

(74) Representative: **Freed, Arthur Woolf et al**
**Edward Evans Barker**
**Clifford's Inn**
**Fetter Lane**
**London EC4A 1BZ (GB)**

(56) References cited:
**EP-A- 0 429 828          EP-A- 0 732 382**

• **PATENT ABSTRACTS OF JAPAN vol. 095, no. 010, 30 November 1995 & JP 07 188597 A (KURETAKE SEISHIYOUDOU:KK), 25 July 1995**

## EP 0 853 106 B1

**Description**

Technical Field

The present invention relates to pigment ink which permits printing with an increased optical density and improved permanence and a recording method which is capable of recording by selecting specific ink drops from a continuous stream of drops and directing them towards the image receiver.

Background Art

Continuous ink jet recording has several advantages in that it produces low noise and can obtain a high-resolution recorded image at a high speed by utilizing a highly integrated head. Such an ink jet recording method uses as ink a solution obtained by dissolving one of various water-soluble dyes in water or a solvent mixture of water and an organic solvent. Current state-of-the-art aqueous ink jet inks utilize water soluble dyes to attain acceptable redissolvability of the dried ink on the orifice plate. This redissolvability is essential for good machine runnability as well as start-up for continuous ink jet printers which do not have a separate printhead cleaning fluid mechanism.

Because the water-soluble dye exhibits poor light resistance, when such a water-soluble dye is used, the light resistance of the recorded image frequently becomes a problem. In addition, because the ink is soluble in water, the water resistance of the recorded image also frequently becomes a problem. Namely, when rain, sweat or drinking water is applied to the recorded image, the recorded image is blurred with the ink or even disappears in some cases. With dye based inks, then, there is an issue of redissolvability.

A water based pigment ink on the other hand, may be able to provide waterfastness as pigments are dispersed rather than dissolved. Because writing utensils such as ball point pens, which use dyes, encounter the same problem, various kinds of aqueous pigment ink for writing utensils have been proposed for resolving the problems with respect to light resistance and water resistance. When conventional aqueous pigment ink for writing utensils is used in an ink jet printing device of the type in which printing is accomplished by discharging an ink from one or more orifices of a printhead as a stream of ink droplets, however, there is a problem in that the stability of drop stream generation is significantly deteriorated, and printing failure occurs. For pigment inks, then, redispersion, rather than redissolvability, must be achieved to have good system start-up. Use of pigments rather than dyes creates some further complications which are not present with dyes. For example, dye based inks provide dry film which has high dried film resistivity. Pigment based inks, particularly black inks, on the other hand, provide films which are conductive.

When an ink which uses carbon black is used in ink jet printing, although the fastness of the image printed on plain paper is significantly improved, as compared with that of the image printed by using dye ink, later research reveals a disadvantage in that the density of the printed image is inferior to that of the image printed by using dye ink. Unfortunately, if the pigment concentration is increased to improve the print darkness, the discharging stability significantly deteriorated.

Because printing ink can be used at an extremely high concentration, compared to ink used in an ink jet printing device, the print density can be easily increased by increasing the pigment concentration in the ink. The density can also be increased by increasing the thickness of the coated ink layer. However, printing very dark images with ink jet printing is very difficult, because the size of the orifice is very small, and the amount of the ink printed is limited. In addition, as described above, an increase in the concentration of the pigment contained in the ink causes the occurrence of undesirable troubles in the formation of stable, straight jets. Although some of the conventional aqueous pigment inks have excellent jet forming properties for a relatively short time, such inks have a problem because the conductivity of dried films of the ink are quite conductive. This means that when a continuous ink jet printhead is shut down, the films formed from the dried films tend to short out electrodes in the system, when an attempt is made to restart the printhead. On the other hand, it has been observed that inks whose dry film resistivity is too high give rise to another problem. When a jet is in "catch," that is, the drops are being recirculated rather than used for printing, there is typically an impact line on the catcher surface where the jet impacts. Just above the impact line, dried ink tends to collect, and if the ink is a pigment ink, the dried ink contains concentrated pigment. If the dried pigment is too insulating, the charge on the catch drops tends to accumulate on the area of dried pigment to the extent that it can deflect the ink stream away from the catcher. In this case, the stream of catch drops can actually reach the print media, causing an improper black streak.

It is seen then that there is a need for an improved pigment based ink suitable for use in continuous ink jet printers, which overcomes the problems associated with prior art inks.

Summary of the Invention

This need is met by the ink composition according to the present invention, wherein an ink is provided which permits the printing of an image with both superior fastness and high density. The ink also has excellent long-term storage stability, which permits printing with high density. Furthermore, although the ink dries on the catcher face, it does not form to a conducting dry film on the printhead electrodes.

In accordance with one embodiment of the present invention, an ink is provided for discharge as a plurality of continuous streams from a plurality of orifices by applying pressure to the ink, and in which selected drops from the plurality of streams are deflected via an electrostatic charging system so that they strike the receiver at a position determined by the image structure provided from a data system. The ink comprises an aqueous liquid medium containing acid carbon black having a volatile content within the range of 3.5 to 8% by weight of the total weight of the acid carbon black and a water-soluble resin having a weight average molecular weight within the range of 5,000 to 25,000, wherein the weight ratio of the acid carbon black to the water soluble resin is within the range of 2:1 to 5:1, and the water-soluble resin dissolved in the medium being 2% by weight or less. The ink further comprises a dispersed pigment having a maximum particle size less than 1 micron.

Accordingly, it is an object of the present invention to solve the above-described problems of prior art and provide ink which permits the printing of an image with both superior fastness and high density. It is another object of the present invention to provide an ink which has excellent long-term storage stability, which permits printing with high density and which discharges when it dries on the catcher face, yet does not form to a conducting dry film on the printhead electrodes.

Other objects and advantages of the invention will be apparent from the following description and the appended claims.

Brief Description of the Drawing

Fig. 1 is a cross-sectional view illustrating the operation of a multi-deflection continuous ink jet system; and
Fig. 2 is a cross-sectional view illustrating the operation of a binary array continuous ink jet system.

Detailed Description of the Invention

The ink jet ink composition of the present invention comprises an aqueous liquid medium containing acid carbon black having a volatile content within the range of 3.5 to 8% by weight of the total weight of the acid carbon black and a water-soluble resin having a weight average molecular weight within the range of 5,000 to 25,000, wherein the weight ratio of the acid carbon black to the water soluble resin is within the range of 2:1 to 5:1, and the water-soluble resin dissolved in the medium being 2% by weight or less. The ink further comprises a dispersed pigment having a maximum particle size less than 1 micron.

An example of the printing apparatus which are preferable for printing by using the ink of the present invention is an apparatus in which ink is sprayed under pressure from one or more orifices. The jets produces by this process are disintegrate into drops by the action of surface tension. The disintegration process, however is made highly uniform by stimulating the jets at the natural breakoff frequency for the jets, as is known in the art. The droplets produced are very uniform in size, and spacing. Charging electrodes placed at the breakoff point charge the drops to separate the drops to be printed from drops to be caught and discarded or recirculated.

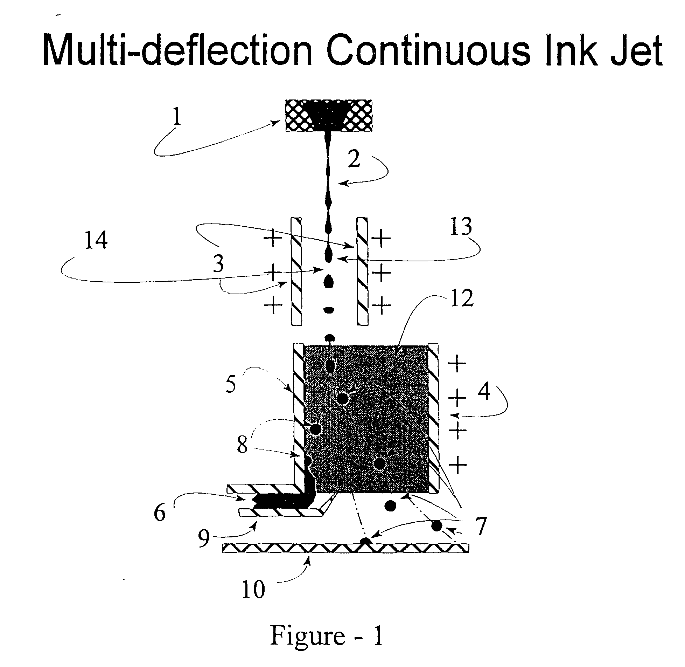

Referring now to Fig. 1, there is illustrated a cross-sectional view of a multi-deflection ink jet printer. A drop generator system 1 contains one or more orifices to which ink is supplied under pressure. The ink issues from the orifice as a stream 2 which is stimulated by mechanical or electrical means so that the jet breaks up into a highly uniform stream of evenly spaced droplets. At the point at which the stream disintegrates into droplets 14, a charging electrode 3 in close proximity to the jet is charged, as illustrated by the plus signs. Since the ink is conducting and is grounded at the drop generator, an opposite charge is induced on the last drop which is connected to the jet 13. When the drop breaks off from the jet 2 it is insulated from further charging. If the charge on the charging electrode 3 is properly timed to the breakoff of the drops, different levels of charge can be placed on different drops. Thus, for example, one level of charge can be placed on drops which are not desired for printing, and a plurality of other levels of charge can be placed on drops which are desired for printing. After the drops receive their charge, they continue into a region 12 in which an electric field is produced by electrodes 4 and 5. The drops experience a force in the electric field region which is proportional to their charge. Drops having a high level of charge experience a larger force, and experience a large deflection. Drops with a low level of charge experience a smaller force and experience a smaller deflection. This allows print drops 7 to land on the print substrate 10 at a plurality of drop positions, and gives rise to the name multi-deflection continuous ink jet. Note that a single jet in a multi-deflection ink jet printer can print a small swath of image as the substrate 10 moves in a direction perpendicular to the figure.

Continuing with Fig. 1, drops 8 which are not needed for printing the desired image, move on a trajectory towards the catcher 9, which may also serve as part of the ground electrode in the electric field structure. Drops which impact the catcher 9 are subsequently drawn away from the printhead through a tube 6 by vacuum, gravity, or a combination of the two forces. In this way, a drop stream from the jet 2 is separated into print and catch drops, and the print drops are further segregated into a plurality of trajectories which, in combination print the desired image.

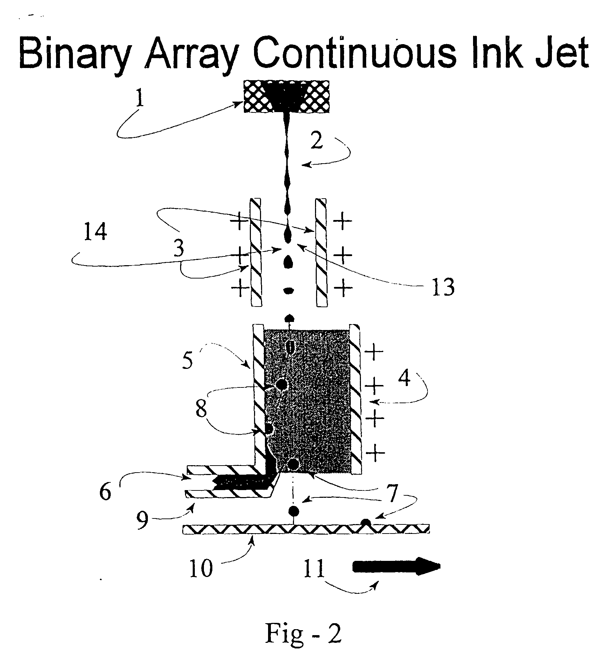

Referring now to Fig. 2, there is illustrated a very similar configuration for the binary array continuous ink jet system. Drop generation and charging are done as was described for Fig. 1 except that for binary array printing, only two charge levels are involved. In the binary array continuous ink jet configuration, drops 8 are typically charged to a given fixed level to cause them to be deflected into the catcher 9. Print drops are typically left uncharged. Printing with uncharged drops means that the impact point for the drops on the print receiver is determined by the directionality of the jets. The system is called binary because drops are charged to only two levels; charged for catching, or left uncharged for printing.

It is clear from Fig. 2, that a single binary ink jet can only print a single line of spots. In order to print an image, either an array of jets must be used, or the receiver must be moved relative to the printhead. There are commercially available systems which mount the substrate on a drum. Then the printhead is moved along the axis of the drum while it rotates to allow the printhead to print a spiral path across the receiver. There are also commercially available systems which consist of a large number (over 1000, for example) of jets arranged in one or two linear rows. Each jet is a binary continuous ink jet, but the combined linear array is able to print a swath of many inches as the substrate moves beneath the printhead in the direction 11.

The ink according to the present invention not only produces a print having good fastness and high density on plain paper but also enables the straight jets required for binary continuous ink jet illustrated in Fig. 2. In continuous ink jet systems, it often happens that more drops are created per unit time than are needed for printing a completely covered area, such as a black area in a black and white printer. It is also typical that, for example in text printing, only about 5% of the area is covered in a typical document. This means that it is typical for 95% or more of the ink to be caught and recirculated through the ink handling system. Accordingly, it is a requirement for good operation that the ink be tolerant of being refiltered 20 or more times, without breakdown of the stability of the dispersion.

In order to check feasibility of a dispersion in a printer, any suitable procedure may be used, such as a simplified filtration procedure as summarized. Initially, a vacuum filtration unit (for example, 47 millimeter filter size) is set up without a filter with a four liter flask at seven inches of mercury. Next, a 47 mm diameter disc filter of appropriate pore size (such as a Versapor 1200 - 1.2 micron pore size or Versapor 3000 - 3 micron pore size) is put at seven inches of mercury. Third, 1 liter of deionized water is poured, while the time for the water to pass through the filter is measured. This step is repeated three times to insure times are within a normal variation. Also, the temperature of the water should be recorded. Without dissembling the apparatus, 500 ml of test fluid is added and the time it takes to pass through the filter is recorded, as is the temperature of the sample. Finally, the corrected filtration ratio of the sample is calculated using the following equation:

Filtration Ratio = Time of water in seconds

multiplied by fluid sample viscosity @

25° C in cp, divided by Time of sample in

seconds x 2 x water viscosity @ 25° C in cp.

In a preferred embodiment of the present invention, a pigment based ink suitable for use in continuous ink jet printers has a filtration ratio greater than or equal to 0.2 through a 1.2 micron filter. Furthermore, for continuous ink jet printing, the ink has a particle size of less than 1 micron, and, in a preferred embodiment, less than 0.3 microns. An ink comprising a dispersed pigment and in accordance with the preferred embodiment, permits the printing of an image with both superior fastness and high density. Furthermore, such an ink is still capable of enabling the straight jets required for binary continuous ink jet and is tolerant of being refiltered multiple times. Realizing this, the invention is illustrated with the following examples. In the following examples, the particle size and the filtration ratio was measured on various dispersions to determine the compatibility of the dispersions in continuous ink jet printing.

EXAMPLE 1

Several commercially available pigment materials were obtained, to determine suitability for continuous ink jet printing. The materials typically are in a readily dispersible solid form or liquid dispersion form. A liquid dispersion of at least 1.5% by weight pigment concentration was prepared as per the specified procedures by the manufacturers.

**EP 0 853 106 B1**

The resulting samples were evaluated for particle size using a Microtrac Ultra fine Particle size analyzer, and for filtration ratio using the above mentioned procedure. Table I shows results.

TABLE I

| Dispersion | Filtration ratio 1.2 micron filter | maximum Particle Size (100% below) microns |
|---|---|---|
| Micrilith Black C-WA (Ciba - Geigy) | 0.0 | 0.81 |
| Hostafine Black T (Hoechst) | 0.0 | 0.81 |
| Disperse Jet Black 1 (BASF) | 0.0 | 0.41 |

Based on the results, the above tested dispersions were considered unsuitable for use in continuous ink jet printers. One, the maximum particle size, while not necessarily outside a usable range, are greater than preferred. Two, the filtration ratio is zero in all of the above measurements, and that is through a 3 micron filter. Hence, a filtration ratio of ≥ 0.2 through a 1.2 micron filter would not be possible.

The present invention proposes an ink comprising an aqueous liquid medium which contains acid carbon black having a volatile content within the range of 3.5 to 8% by weight of the total weight of the carbon black. A volatile content within this range appears to give better dispersibility and, consequently, higher print density. The ink further comprises a water-soluble resin having a weight average molecular weight within the range of 5,000 to 25,000. If the weight average molecular weight is greater than about 25,000, the resultant viscosity tends to be undesirably high, and the particle size increases. Conversely, if the weight average molecular weight is less than about 5,000, the necessary steric hindrance is not available, which adversely affects stability. With this ink, the weight ratio of the acid carbon black to the water-soluble resin is within the range of 2:1 to 5:1. If the weight ratio is greater than that range, the ink would contain more carbon and less polymer, and, therefore, insufficient stability; if the weight ratio is less than that range, the ink would contain excessive polymer, making the viscosity of the dispersion go high.

Example 2

For example, one suitable pigment dispersion is experimental pigment dispersion Microjet S801, made by Orient Chemical Company. This dispersion was diluted with deionized water so as to reach a pigment concentration of 2% by weight. The resulting dispersion was then evaluated for filtration properties, as per the mentioned procedure, and particle size analysis. The results obtained are as follows:

| Filtration ratio 1.2 micron filter | Maximum Particle size (100% below) microns |
|---|---|
| 0.59 | 0.20 |

Based on the above results, the dispersed pigment meets the preferred embodiment of a particle size less than 0.3 microns and a filtration ratio ≥ 0.2 through a 1.2 micron filter.

In accordance with the present invention, a dispersion being considered for use in a continuous ink jet printer is subjected to an ink circulation test, to determine its tolerance for refiltration and non-conductance of its dried film. An ink formulated using a dispersed pigment having a particle size of 0.20 microns and a filtration ratio of 0.59 was circulated through a circulation stand, designed to simulate ink circulation in a printer, for more than 100 hours. The shear stability of the ink was checked by comparing physical properties of used ink with the fresh ink. The lack of significant change in ink properties demonstrated that the dispersion based ink was stable. Furthermore, measurement of the pressure drop across the filter did not indicate filter clogging.

The present invention provides an ink which permits the printing of an image with both superior fastness and high density. Furthermore, the ink has excellent long-term storage stability. This permits printing with high density, yet does not form to a conducting dry film on the printhead electrodes.

Industrial Applicability and Advantages

The present invention is useful in the field of ink jet printing, and has the advantage of formulating an ink composition which permits the printing of an image with both superior fastness and high density. The present invention provides the further advantage of providing an ink which has excellent long-term storage stability, which permits printing with high density and which discharges when it dries on the catcher face, yet does not form to a conducting dry film on the printhead electrodes.

The invention has been described in detail with particular reference to certain preferred embodiments thereof,

5

but it will be understood that modifications and variations can be effected within the scope of the invention.

**Claims**

1. A continuous ink jet printing ink composition comprising an aqueous liquid medium which contains acid carbon black having a volatile content within the range of 3.5 to 8% by weight of the total weight of the carbon black and a water-soluble resin having a weight average molecular weight within the range of 5,000 to 25,000, wherein the weight ratio of said acid carbon black to said water-soluble resin is within the range of 2:1 to 5:1, and a dispersed pigment having a particle size less than 1 micron.

2. An ink composition as claimed in claim 1 wherein the dispersed pigment comprises a dispersed pigment having a maximum particle size less than 0.3 microns.

3. An ink composition as claimed in claim 1 wherein the dispersed pigment comprises a dispersed pigment having a filtration ratio as greater than or equal to 0.2 through a 1.2 micron filter.

4. A process for generating images which comprises incorporating into a ink continuous ink jet printing apparatus the ink composition of claim 1, 2 or 3 and forming images by causing the ink to be expelled in droplets onto a substrate, thereby generating an image on the substrate.

5. A process as claimed in claim 4 wherein the image is generated by a continuous stream ink jet printing process.

**Patentansprüche**

1. Tintenzusammensetzung für das kontinuierliche Tintenstrahldrucken, enthaltend ein wässriges Flüssigkeitsmedium, welches saures Rußschwarz, das einen flüchtigen Gehalt im Bereich von 3,5 bis 8 Gewichtsprozent des Gesamtgewichts von Rußschwarz aufweist, und ein wasserlösliches Harz, das ein gewichtsmittleres Molekulargewicht innerhalb des Bereichs von 5.000 bis 25.000 aufweist, wobei das Gewichtsverhältnis des sauren Rußschwarz zu dem wasserlöslichen Harz innerhalb des Bereiches von 2:1 bis 5:1 reicht, und ein dispersiertes Pigment, welches eine Partikelgröße kleiner als 1 Mikrometer besitzt.

2. Tintenzusammensetzung nach Anspruch 1, bei der das dispersierte Pigment ein dispersiertes Pigment mit einer maximalen Partikelgröße kleiner als 0,3 Mikrometer enthält.

3. Tintenzusammensetzung nach Anspruch 1, bei der das dispersierte Pigment ein dispersiertes Pigment mit einem Filtrationsverhältnis größer als oder gleich 0,2 durch einen 1,2 Mikrometerfilter enthält.

4. Verfahren zum Erzeugen von Bildern, welches die folgenden Schritte enthält: Einfüllen der Tintenzusammensetzung nach Anspruch 1, 2 oder 3 in einen kontinuierlichen Tintenstrahldrucker und Erzeugen von Bildern dadurch, dass die Tinte in Tröpfchen auf ein Substrat aufgebracht wird, wodurch ein Bild auf dem Substrat erzeugt wird.

5. Verfahren nach Anspruch 4, bei dem das Bild durch einen kontinuierlichen Tintenstrahl-Druckvorgang erzeugt wird.

**Revendications**

1. Composition d'encre pour impression à jet d'encre en continu comprenant un milieu liquide aqueux qui contient du noir de carbone acide possédant un composant volatile dans la gamme de 3,5 à 8% en poids du poids total de noir de carbone et une résine soluble dans l'eau possédant un poids moléculaire moyen dans la gamme de 5000 à 25000, dans laquelle le rapport en poids du noir de carbone acide sur la résine soluble dans l'eau est compris entre 2:1 et 5:1, et un pigment dispersé présentant une dimension de particules inférieure à 1 micron.

2. Composition d'encre selon la revendication 1, dans laquelle le pigment dispersé comprend un pigment dispersé possédant une dimension de particules maximale inférieure à 0,3 micron.

3. Composition d'encre selon la revendication 1, dans laquelle le pigment dispersé comprend un pigment dispersé présentant un taux de filtrage supérieur ou égal à 0,2 à travers un filtre de maille de 1,2 microns.

4. Procédé pour la génération d'images comprenant l'incorporation dans un appareil d'impression à jet d'encre en continu d'une composition d'encre selon la revendication 1, 2 ou 3, et pour la formation d'images en provoquant l'expulsion de l'encre sous la forme de gouttelettes sur un support, générant ainsi une image sur le support.

5. Procédé selon la revendication 4, dans lequel l'image est générée par un procédé d'impression à jet d'encre à jet continu

# Multi-deflection Continuous Ink Jet

Figure - 1

EP 0 853 106 B1

# Binary Array Continuous Ink Jet

Fig - 2

EP 0 853 106 B1